(19) Europäisches Patentamt
European Patent Office
Office européen des brevets

(11) Publication number: **0 231 881**
**A1**

(12) # EUROPEAN PATENT APPLICATION

(21) Application number: **87101201.9**

(22) Date of filing: **29.01.87**

(51) Int.Cl.[3]: **C 08 L 67/06**
//(C08L67/06, 51:00)

(30) Priority: **31.01.86 JP 19776/86**

(43) Date of publication of application:
**12.08.87 Bulletin 87/33**

(84) Designated Contracting States:
**DE FR GB**

(71) Applicant: **NIPPON OIL AND FATS COMPANY, LIMITED**
**10-1, Yuraku-cho 1-chome**
**Chiyoda-ku Tokyo(JP)**

(72) Inventor: **Haba, Michio**
**3-6, Hiiragi-Cho 5-chome**
**Handa-shi Aichi-Prefecture(JP)**

(72) Inventor: **Takamatsu, Chihiro**
**39, Aza-Tenkodo Oaza-Uedai**
**Agui-cho Chita-Gun Aichi-Prefecture(JP)**

(72) Inventor: **Fukushi, Kyosuke**
**979-33, Aza-Kanda Oaza-Rengoji**
**Kuwana-shi Mie-Prefecture(JP)**

(74) Representative: **Patentanwälte Grünecker, Kinkeldey, Stockmair & Partner**
**Maximilianstrasse 58**
**D-8000 München 22(DE)**

(54) **Low-shrinking unsaturated polyester composition.**

(57) By subjecting polymer having high compatibility to an unsaturated polyester resin to an elastomer, it is possible to suppress separation of the elastomer from the unsaturated polyester resin, and to provide dispersion stability, thereby imparting the molding with low-shrinking property and excellent surface smoothness and toughness.

EP 0 231 881 A1

# LOW-SHRINKING UNSATURATED POLYESTER RESIN COMPOSITION

## BACKGROUND OF THE INVENTION

### Field of the Invention

This invention relates to low-shrinking unsaturated polyester resin compositions and, more particularly, to low-shrinking unsaturated polyester resin compositions, which permit formation of molding having toughness and excellent surface smoothness.

Heretofore, unsaturated polyester resins have been utilized as glass fiber reinforced plastic material for a sheet molding compound ( SMC ) molding process, a bulk molding compound ( BMC )molding process, a hand lay-up molding process, a resin injection molding process, etc and as a resin concrete material or casting material using a calcium carbonate, an aluminum hydroxide or silica sand as an aggregate.

However, the unsaturated polyester resin undergoes shrinkage by 5 to 12 % at the time of the hardening , and the molding is apt to get a mechanical strength reduction, crack generation, surface scumming, warping, strain, etc.

These phenomena stem from the

insufficiency of the ductility, i.e., toughness, of the molding.

For a method of reducing the shrinkage at the time of hardening the unsaturated polyester resin moldings and providing the same excellent surface smoothness and ductility to the molding, it has been proposed to blend various elastomers with the unsaturated polyester resin.

More particularly, by employing a polyurethane series low-shrinking agent ( which is made public in the 38th Society of the Plastic Industry Sec., 3-B) and a styrene-butadiene block copolymer ( which is made public in the 39th Society of the Plastic Industry Sec., 2-C), toughness is provided to the SMC molding, and it is possible to obtain a molding having excellent surface smoothness.

Further, it has been proposed in Japanese Laid-Open patent publication 58-189214 to employ these elastomers in combination with the polyvinyl acetate-polystyrene block copolymers.

## SUMMARY OF THE INVENTION

An object of the invention is to provide a low-shrinking unsaturated polyester resin

composition, which imparts the molding with excellent surface smoothness and toughness.

Another object of the invention is to provide a low-shrinking unsaturated polyester resin composition, which has a high compatibility of the elastomer to the unsaturated polyester resin so that the two are difficultly separable.

A further object of the invention is to provide an unsaturated polyester resin, which can eliminate the non-uniformity of shrinkage by hardening without being subjected to mold contamination at the time of the molding and permits improvement of the warping and mechanical strength reduction of the molding and inferiority of the pigment coloring property and coating property.

The present invention is based on finding that by graft-polymerizing a polymer having a high compatibility with respect to the unsaturated polyester resin, it is possible to suppress separation of the elastomer from the unsaturated polyester resin and to provide the dispersion stability, thereby providing molding thus obtained with low-shrinkage property and excellent surface smoothness and toughness.

The present invention is characterised

in that a low-shrinking unsaturated polyester resin composition comprises 100 parts by weight of a mixture consisting of :

(A): 20 to 70 % by weight of an unsaturated polyester : and

(B): 80 to 30 % by weight of a monomer copolymerizable with said unsaturated polyester (A), and

(C): a graft copolymer wherein 10 to 90 % by weight of a vinyl polymer obtained by a radical polymerization with a solubility parameter value ( SP value ) of 8.3 to 9.7 is grafted to 90 to 10 % by weight of an elastomer which is soluble in a styrene monomer, based on the sum of the vinyl polymer and the elastomer,

said graft-copolymer being contained in an amount of 2 to 50 parts by weight with respect to the sum of said unsaturated polyester (A) and the monomer copolymerizable with said unsaturated polyester (B).

The unsaturated polyester (A) employed in accordance with the invention is prepared from $\alpha,\beta$-unsaturated dibasic acid, saturated dibasic acid and glycols.

As the $\alpha,\beta$-dibasic acids are herein stated, there are mentioned a maleic acid

ahydride, a maleic acid, a fumaric acid, a messaconic acid, a tetraconic acid, a itaconic acid and alkyl esters of these acid or the like.

As the saturated dibasic acid, there are mentioned a phthalic acid, a orthophthalic acid, a isophthalic acid, a telephthalic acid, a tetrahydrophthalic acid, a halogenated phthalic acid anhydride, an adipic acid, a succinic acid, a sebacic acid and alkyl esters of these acids or the like.

For example, glycols are an ethylene glycol, a diethylene glycol, a propylene glycol, a dipropylene glycol, a butylene glycol, a neopentyl glycol, a hexylen glycol, a hydrogenated bisphenol A, a 2,2'-di ( 4-hydroxypropoxy-phenyl ) propane, a 2,2'-di (4-hydroxyethoxyphenyl )propane, an ethylene oxide and propylene oxide.

The amount of the unsaturated polyester (A) incoroporated is preferably 20 to 70 % by weight based on the total amount of the unsaturated polyester (A) and the monomer (B).

If the amount exceeds 70 % by weight, the molding that is obtained is very hard and fragile.

If the amount is less than 20 % by

weight, on the other hand, the mechanical strength is low, giving rise to mechanical property problems.

As for the monomer (B) copolymerizable with the unsaturated polyester (A), there are mentioned alkenyl aromatic monomers such as a styrene, an α-methylstyrene, a t-butylstyrene and other alkenyl aromatic monomers and alkyl esters such as acrylic ester, methacrylic acid ester and the like.

Among these compounds, styrene is particularly preferred.

The amount of the monomer (B) incoporated is preferably 30 to 80 % by weight with respect to the sum of the amounts of the unsaturated polyester (A) and the monomer (B).

If the amount exceeds 80 % by weight, the rate of hardening is insufficient, so that the mechanical strength of the molding is insufficient.

If the amount is less than 30 % by weight, the viscosity is too high, so that it is impossible to obtain an unsaturated polyester resin composition which can stand practical use.

Examples of the elastomer dissolved in styrene monomer in graft-copolymer (C) which is

added for the purpose of giving the unsaturated polyester resin with toughness and also providing the surface smoothness and low-shrinking property, are an acrylonitrile-butadiene copolymer ( available under a trade name ' Hiker CTBN' by BF Gridrich Inc.) having end carboxylic group and acrylonitrile-butadiene copolymer (available under a trade name ' Hiker CTBN' by BF Gridrich Inc.) having end vinyl group.

These compounds are used as liquid elastomer, styrene-butadeine-styrene block copolymer ( available under a trade name ' Crayton and Solprene ' by Shell Chemical Co., Ltd.) used as polystyrene-based thermoplastic elastomer, ethylene propylene diene terpolymer ( available under a trade name ' Esprene' by Sumitomo Chemical Co., LTD.) .

As for examples of polyolefin-based thermoplastic elastomer, there are mentioned a 1,2-polybuthadiene-based thermoplastic elastomer, a polyurethane-based elastomer and a polyester-based thermoplastic elastomer.

Preferred elastomers are polystyrene-based a thermoplastic elastomer and a polyolefin-based thermoplastic elastomer.

The amount of the elastomer in the graft-copolymer (C) is 10 to 90 % by weight.

If the amount is less than 10 % by weight, sufficient toughness of the unsaturated polyester resin can not be obtained.

If the amount exceeds 90 % by weight, the separation with respect to the unsaturated polyester resin becomes easily.

As the vinyl-based copolymer which is grafted with the elastomer, there are those with the SP value ranging from 8.3 to 9.7.

If the SP value is outside this range, the SP value of the unsaturated polyester resin is outside the range of 9.1 to 9.4.

Therefore, high affinity with the unsaturated polyester resin can not be obtained, and separation is liable to occur.

Examples of the vinyl-based polymer and the SP value thereof according to the invention are a polymethylmethacrylate with the SP value of 9.1 to 9.5, a polyethylmethacrylate with the SP value of 8.95 to 9.1, a poly-n-propyl methacrylate with the SP value of 8.8, a poly-n-buthyl methacrylate with the SP value of 8.3 to 8.75, a poly-t-buthyl-methacrylate with the SP value of 8.7, a polyethoxy ethyl-methacrylate with the SP value of 9.0, a polyethylacrylate

with the SP value of 9.2 to 9.4, a poly-n-propyl acrylate with the SP value 9.0, a poly-n-buthylacrylate with the SP value of 8.7 to 9.0, a polyvinyl acetate with the SP value of 9.4 and a polystyrene with the SP value of 8.6 to 9.1.

Preferred vinyl-based polymers are a polymethyl-methacrylate, a polyvinyl acetate and a polystyrene.

Further, it is possible to use a block copolymer having these vinyl-based polymers as a segment.

The amount of the vinyl-based polymer in the graft copolymer (C) ranges from 10 to 90 % by weight.,

If the amount is less than 10 % by weight, the compatibility with the unsaturated polyester resin is inferior.

If the amount is above 90 % by weight , insufficient toughness is given to the unsaturated polyester resin.

To manufacture the graft copolymer (C) by grafting a vinyl-based polymer to the elastomer, such monomer as methyl methacrylate, vinyl acetate or styrene and an organic peroxide having a group copolymerizable with the monomer are used.

First, copolymer having pendant peroxide group is obtained.

Then, this is grafted with the elastomer by mixing and heating.

Alternately, the elastomer and vinyl-based polymer are mixed and heated for grafting in the presence of an organic peroxide with a 10-hour half period temperature of 60 to 150 ℃.

The amount of the graft-copolymer thus obtained is 2 to 50 parts by weight with respect to 100 parts by weight of the sum of the unsaturated polyester (A) and monomer (B).

If the amount is less than 2 parts by weight, it is difficult to maintain sufficient dispersion stability of the elastomer in the graft-copolymer (C) with respect to the unsaturated polyester resin.

If the amount exceeds 50 parts by weight, sufficient toughness can not be imparted to the unsaturated polyester resin, and also the surface smoothness of the molding is insufficient.

The low-shrinking unsaturated polyester resin composition according to the invention may be used for various purposes, and also it may be combined with various fillers such as, a calcium carbonate, a silicic acid anhydride, a powdered

silica, a clay, and a coloring agents such as pigments and dyes, viscosity promoter such as, calcium oxide and magnecium oxide, reinforcement materials such as glass fiber, glass baloon and organic fibers and well-known hardening agents to produce materials for the SMC molding, bulk molding compound molding and preform or mat molding for obtaining moldings,
which have toughness and excellent surface smoothness and dimensional precision.

According to the invention, it is possible to increase the compatibility of the elastomer to the unsaturated polyester resin, suppress separation, thereby prevent mold contamination and at the time of the molding and non-uniformity of shrinkage by hardening and improve the warping of the molding, mechanical strength reduction and inferiority of the pigment coloring property and coating property.

PREFERRED EMBODIMENTS OF THE INVENTION

Reference Examples

Now, the invention will be described in detail with reference to Reference Examples, Examples and Comparative Examples.

Reference Example 1

(Preparation of a peroxide based pendant polystyrene)

There were charged 195 g of styrene monomer, 5 g of t-buthyle peroxy methacryloxyethyl carbonate.

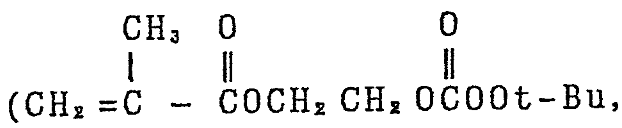

purity : 96 %, 10-hour half period temperature: 104 ℃ ) and 800 g of an aquaous solution of 0.05 % polyvinyl alcohol were charged into 2ℓ -flask provided with a thermometer, a reflux cooler and an agitator for reaction at 80 ℃ for 8 hours, followed by filtering and drying to obtain 172 g of a peroxide based pendant polystyrene.

With this polystyrene, the number average molecular weight from the gel permiation chromatography was to be 85,000, the weight average molecular weight was 306,000, and the peroxide content from iodometry was 1.1 % by weight.

Reference Example 2

( Crayton Reaction of Styrene-Ethylene-Buthadiene-Styrene ( SEBS ) to Elastomer into Polystyrene )

50 parts by weight of SEBS block copolymer ( available under a trade name "Crayton GX 1855" by Shell Chenical Co., Ltd.) and 50 parts by weight of a peroxide based pendant polystyrene obtain in Manufacture Example 1 were preliminarily mixed, and the mixture was applied to a former at 200 ℃ to obtain a pellet-like composition of SEBS grafted polystyrene.

Reference Example 3

(Preparation of a block copolymer of peroxide based pendant polystyrene-polyvinyl acetate )

Into a flask, there were charged 200 parts by weight of water in which 0.5 part by weight of a polyvinyl alcohol was dissolved.

Then, the content of the flask was heated at a temperature of 60 ℃ under a nitrogen stream and into the flask there were charged 10 parts by weight of a vinyl acetate monomer 0.3 part by weight of a t-butyle peroxy allyl carbonate

( $CH_2=CH-CH_2OC(=O)OO-t-Bu$, purity ; 70 %, 10 hrs half

period temperature : 104 ℃ ), and 0.9 part by weight of a polymeric peroxide

( $\left( \overset{O}{\overset{\|}{C}}(CH_2)_4\overset{O}{\overset{\|}{C}}O(C_2H_4O)_3\overset{O}{\overset{\|}{C}}(CH_2)_4\overset{O}{\overset{\|}{C}}OO \right)_6$, purity : 60 %, 10 hrs half period temperature ; 63 ℃ ) were added to apply to a polymerization to the resulting mixture.

When the polymerization was over, furthermore, 90 parts by weight of a styrene were added to the resultant mixture followed by polymerizing the same, heating at a temperature of 80 ℃, to obtain a block copolymer of polystyrene-polyvinyl acetate having pendant peroxide group.

The number average molecular weight the obtained block copolymer was 90,000 and the content of peroxide was 0.3 weight % by iodometry.

Reference Example 4

(Graft Reaction of polystyrene-polyvinyl acetate block copolymer to a Styrene-Butandiene-Styrene ( SBS ) elastomer.

There were preliminaly admixed with 25 parts by weight of SBS block copolymer ( produced Shell Chemical Corporation, trade name ; solprene T 141 ) and 75 parts by weight of a peroxide

based pendant polystyrene-polyvinyl acetate which was obtained according to Reference Example 3, and the resultant mixture was applied to an extruder former at a temperature of 200 ℃ to obtain pellet composition of a SBS graft polystyrene-polyvinyl acetate block copolymer.

Reference Example 5

( Same to Reference Example 4 )

A pellet composition of a SBS graft polystyrene-polyvinyl acetate block copolymer was prepared according to the same procedures as that described in Reference Example 4 except that there were employed 75 parts by weight of SBS block copolymer ( same as that obtained in Reference Example 4 and that 25 parts by weight of a peroxide based pendant polystyrene-polyvinyl acetate which was prepared according to Reference Example 3 was employed.

Reference Example 6

(Same to Reference Example 4 )

A pellet composition of SBS grafted polystyrene-polyvinyl acetate block copolymer was prepared according to the same procedures as described in Reference Example 4 except that 10

parts by weight of SBS block copolymer and that 90 parts by weight of peroxide based pendant polystyrene-polyvinyl acetate block copolymer which was prepared by Reference Example 3 was employed.

Reference Example 7

( Preparation of peroxide based pendant polyvinyl acetate )

In the same apparatus as that used in Reference Example 1, there were charged with 195 g of a vinyl acetate monomer, 5 g of a t-butylperoxy arylcarbonate ( same as in Reference Example 3 ) , 1 g of lauroyl peroxide and 800 g of 0.05 weight % aqueous solution of polyvinyl alcohol.

Then the content of the apparatus was reacted, followed by filtering and drying to obtain 185 g of a peroxide based pendant polyvinyl acetate.

The content of peroxide in this polyvinyl acetate was determined to be 0.8 weight % by iodometry.

Reference Example 8

Subjecting a graft reaction of polyvinyl

acetate to an ethylene propylene diene ( EPDM ) elastomer.

There were preliminaly mixed with 25 parts by weight of EPDM block copolymer ( produced by Sumitomo Chemical Industry Co., LTD, Trade Mark ; Esprene 301 ) and 75 parts by weight of a hydroxide based pendant polyvinyl acetate which was obtained in Reference Example 7.

The resultant mixture was applied to a extruder at 200 ℃ to obtain a pellet composition of an EPDM graft polyvinyl acetate.

Reference Example 9

( Preparation of a hydroperoxide based pendant polymethyl methacrylate )

In the same apparatus used in Reference Example 1, there were charge 195 g of a methyl methacrylate, 5g of a t-butyl peroxy methacryloxyethyl carbonate ( same as that employed in Reference Example 1) , 1 g of a lauroylperoxide and 800 g 0.05 weight % aqueuous solution of polyvinyl alcohol.

The content of the apparatus was reacted at 70 ℃ for 8 hours, followed by filtering and drying to obtain 180 g of a peroxide based pendant polymethylmethacrylate, whose content of

the peroxide was 1.3 weight %.

Reference Example 10

(Subjecting a Graft reaction polymethyl methacrylate to a SEBS elastomer )

There were preliminaly admixed with 25 parts by weight of a SEBS block copolymer ( same as that employed in Reference Example 2 ) and 75 parts by weight of a peroxide based pendant polymethyl methacrylate.

The resultant mixture was subjected to a extruder at 200 ℃ to obtain a pellet composition of SEBS graft polymethyl methacrylate.

Reference Example 11

( Preparation an unsaturated polyester solution)

A mixture of 812 parts by weight of a fumaric acid, 498 parts by weight of isophthalic acid, 396 parts by acid, 396 parts by weight of a propylene glycol and 542 parts by weight of a neopentyl glycol were carried to an esterification, thereby synthesizing an unsaturated polyester ( whose acid value was 30 ).

The obtained unsaturated polyester was diluted with a styrene to adjust the

concentration of styrene therein to be 35 weight %.

Examples 1 to 6

Copolymers obtained by grafting of respective vinyl polymers obtained in Reference Examples 2, 4, 6, 8 and 10 and with SP values ranging from 8.3 to 9.7, to the elastomer were dissolved in styrene such that their content was 30 % by weight.

These solution were added to the unsaturated polyester solution obtained in Reference Example 11 to prepare SMC molding under conditions shown as in Table 1.

Tabie 1 Combining Conditions (unit ; parts by weight)

| | | |
|---|---|---|
| Unsaturated polyester solution | | 70 |
| Styrene solution of grafted copolymer | | 30 |
| para - Benzoquinone | | 0.02 |
| Calcium carbonate | | 100 |
| Zinc stearate | | 5 |
| t - Butyl perbenzoate ester | | 1 |
| Magnesium oxide | | 1 |
| Glass fiber | (1) | 70 |
| Black pigment | (2) | 8 |

Note;

(1) Chopped strand mat (manufactured by Nippon Glass Fiber Co., Ltd, trade mark : EM 450G-1

(2) manufactured by Dainippon Ink Co., Ltd : ND-96

These samples of SMC were aged at 40 ℃ for 20 hours, followed by applying a compression molding to each sample with a molding pressure of 100 $kg/cm^2$ and a press temperature of 140 ℃ to obtain plate-like molding with dimensions of 100 mm by 150 mm by 15 mm.

The molding shrinkage, surface smoothness and coloring property were obtained with respect each molding obtained by the following method, and the separation of the graft-copolymer and unsaturated polyester was examined.

The results are shown in Table 2.

( Molding shrinkage )

A disk with a diameter of 90 mm and a thickness of 11 mm was molded separately by a press molding process in conformity to JIS-K6911 ( general thermo-setting plastic test process ), and the molding shrinkage was determined.

( Surface smoothness )

The surface smoothness was measured using " Supertest III " by Sanho Kogyo Co., LTD, and the evaluation is done as three-grade evaluation as shown in the following.

◎ : Surface roughness : 0 to 0.5 μm

○ : Surface roughness : 0 to 1.0 μm

△ : Surface roughness : 1.0 μm or above

( Coloring property )

For evaluation, four grades, i,e.,splendid, good, satisfactory and bad, are set depending on the extent of pigment irregularity recognized with the baked eyes.

( Separation )

A mixture composed of 30 % by weight of a styren solution of a graft-copolymer and 70 % by weight of unsaturated polyester solution was pourud into a glass test tube with a diameter of 10 mm and a length of 15 cm.

The system was then left at 25 ℃, and the time until the commencement of separation was measured.

Comparative Example 1

A SEBS block copolymer ( which is the same as that employed in Reference Example 2 ) was dissolved in styrene such that its content was 30 % by weight.

The resultant solution was used in lieu of the graft-copolymer styrene solution shown in Table 1 to prepare SMC for testing in the manner as in Examples 1 to 6.

The results are shown in Fig. 2.

Comparative Example 2

EPDM block copolymer ( Which is the same as that employed of Reference Example 8 ) was dissolved in heated styrene such that its content was 10 % by weight for testing in the manner as in comparative Example 1.

The results are shown in Table 2.

Table 2 Results of test about the moulding

| Number of Example | Grafted Copolymer | | | | | | Shrinking rate of molding (%) | Surface smoothness | Colouring Property | Seperate Property (hour) |
|---|---|---|---|---|---|---|---|---|---|---|
| | Elastomer | Parts by weight | Vinyl polymer | SP value | Parts by Weight | Number of Reference Exanple | | | | |
| Example 1 | SEBS | 50 | Polystyrene | 8.6~9.1 | 50 | 2 | 0.11 | ◎ | Splendid | over 10 |
| Example 2 | SBS | 25 | Polystyrene Polyvinyl acetate block copolymer | 8.6~9.1 | 75 | 4 | 0.10 | ◎ | Splendid | over 10 |
| Example 3 | SBS | 75 | Polystyrene Polyvinyl acetate block copolymer | 8.6~9.1 | 25 | 5 | 0.13 | ○ | Splendid | 7 |
| Example 4 | SBS | 10 | Polystyrene Polyvinyl acetate block copolymer | 8.6~9.1 | 90 | 6 | 0.15 | ○ | Splendid | over 10 |
| Example 5 | EPDM | 25 | Polyvinyl Acetate | 9.4 | 75 | 8 | 0.09 | ○ | Good | 5 |
| Example 6 | SEBS | 25 | Polymethyl methacrylate | 9.1~9.5 | 75 | 10 | 0.08 | ○ | Splendid | over 10 |
| Comparative Example 1 | SEBS | - | - | - | - | - | 0.16 | △ | Bad | under 1 |
| Comparative Example 2 | EPDM | - | - | - | - | - | 0.20 | △ | Bad | under 1 |

What is claimed is :

1. A low-shrinking unsaturated polyester resin composition comprises 100 parts by weight of a mixture consisting of :

(A): 20 to 70 % by weight of an unsaturated polyester : and

(B): 80 to 30 % by weight of a monomer copolymerizable with said unsaturated polyester (A), and

(C): a graft copolymer wherein 10 to 90 % by weight of a vinyl polymer obtained by a radical polymerization with a solubility parameter value ( SP value ) of 8.3 to 9.7 is grafted to 90 to 10 % by weight of an elastomer which is soluble in a styrene monomer, based on the sum of the vinyl polymer and the elastomer,

said graft-copolymer being contained in an amount of 2 to 50 parts by weight with respect to the sum of said unsaturated polyester (A) and the monomer copolymerizable with said unsaturated polyester (B).

2. A low-shriking unsaturated polyester resin composition according to claim 1, in which the plastomer is a polystyrene thermoplastic elastomer.

3. A low-shriking unsaturated polyester resin composition according to claim 1, in which the elastomer is a polyolefical thermoplastic monomer.

4. A low-shriking unsaturated polyester resin composition according to any one of claim 1 to 3, in which the vinyl polymer to be grafted with the elastomer is a polystyrene or a polystyrene copolymer.

5. A low-shriking unsaturated polyester resin composition according to any one of claim 1 to 3, in which the vinyl polymer to be grafted with the elastomer is a polymethyl methacrylate.

6. A low-shriking unsaturated polyester resin composition according to any one of claim 1 to 3, in which the vinyl monomer to be grafted with the vinyl monomer is a polyvinyl acetate.

7. A low-shriking unsaturated polyester resin composition according to any one of claim 1 to 6, in which contains one or more adding agents selected from a group consisting of a filler, a coloring agent, a viscosity promotor, a reinforcement agent and a hardener.

0231881

European Patent Office

# EUROPEAN SEARCH REPORT

Application number

EP 87 10 1201

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 136 572 (BASF)<br>* Claim; page 8, lines 9-41 *<br>--- | 1,3,5,7 | C 08 L 67/06 //<br>(C 08 L 67/06<br>C 08 L 51:00) |
| A | US-A-4 079 024 (B. HESS et al.)<br>* Claims 1-5 *<br>--- | 1 | |
| A | FR-A-2 103 059 (HOOKER CHEMICAL CORP.)<br>* Claims 1-13 *<br>--- | 1 | |
| A | GB-A-2 007 681 (OWENS-CORNING FIBERGLAS)<br>* Claims 1-12 *<br>--- | 1 | |
| A | FR-A-2 152 517 (DIAMOND SHAMROCK CORP.)<br>* Claims 1-11 *<br>----- | 1 | TECHNICAL FIELDS SEARCHED (Int. Cl.4)<br>C 08 L |

The present search report has been drawn up for all claims

| Place of search | Date of completion of the search | Examiner |
|---|---|---|
| THE HAGUE | 11-05-1987 | DECOCKER L. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82